# EUROPÄISCHE PATENTSCHRIFT

(11) **EP 2 604 451 B1**
(45) Veröffentlichungstag und Bekanntmachung des Hinweises auf die Patenterteilung: **30.04.2014**
(21) Anmeldenummer: 11009916.5
(22) Anmeldetag: 16.12.2011
(51) Int. Cl.: B60D 5/00

(54) **Falten- oder Wellenbalg eines Übergangs zwischen zwei gelenkig miteinander verbundenen Fahrzeugen**
Gaiter or gangway bellows for the intersection of two vehicles with a jointed connection
Soufflet à plis ou soufflet d'un passage entre deux véhicules liés de manière articulée

(43) Veröffentlichungstag der Anmeldung: 19.06.2013
(73) Patentinhaber: Hübner GmbH & Co. KG, 34123 Kassel (DE)
(72) Erfinder: Heiwig, Matthias, 34286 Spangenberg (DE)
(74) Vertreter: Walther, Walther & Hinz GbR

(56) Entgegenhaltungen:
- EP-A1- 0 631 890
- EP-A1- 1 810 852
- EP-A1- 2 149 462
- EP-A2- 1 182 110
- US-A- 2 168 995

## Beschreibung

Die Erfindung betrifft einen Falten- oder Wellenbalg eines Übergangs zwischen zwei gelenkig miteinander verbundenen Fahrzeugen, wobei der Balg mehrere in etwa U-förmig umlaufende Balgrahmen umfasst, wobei durch die Balgrahmen unter Bildung von Falten oder Wellen Streifen aus Balgmaterial erfasst sind. Die Streifen aus Balgmaterial sind hierbei insbesondere klemmend erfasst. Die mehreren Balgrahmen sind hintereinander unter Bildung von Falten oder Wellen angeordnet.

Falten- oder Wellenbälge als Teil eines Übergangs zwischen zwei gelenkig miteinander verbundenen Fahrzeugen sind aus dem Stand der Technik seit Langem beispielsweise aus der gattungsgemäßen EP 2 149 462 A1 bekannt. Faltenbälge werden vornehmlich bei Fahrzeugen eingesetzt, die in der Lage sein müssen enge Kurven zu durchfahren. Insofern finden solche Faltenbälge vorzugsweise Anwendung bei Straßenbahnen und bei Gelenkbussen. Bei Hochgeschwindigkeitszügen und insbesondere auch bei U-Bahnen werden demgegenüber häufig Wellenbälge eingesetzt.

Faltenbälge sind hierbei üblicherweise derart aufgebaut, dass die einzelnen Falten auf dem Faltenkamm auf der Außenseite des Faltenbalges Balgrahmen aufweisen. Die Balgrahmen nehmen hierbei Streifen aus Balgmaterial auf. Auf der Innenseite eines Faltenbalges sind im Normalfall keine Balgrahmen vorgesehen, dort sind vielmehr die Enden der Streifen aus Balgmaterial durch sogenannte Einfassbänder U-förmig erfasst. Bei Wellenbälgen sind ebenfalls Balgrahmen vorgesehen, die die Enden der wellenförmig geformten Streifen aus Balgmaterial erfassen. Falten- oder Wellenbälge sind tunnelartig ausgebildet und umgeben zumindest die Übergangsbrücke oder Plattform zwischen zwei Fahrzeugen, bei Gelenkbussen auch das Fahrzeuggelenk. Die Enden des U-förmig ausgebildeten Balges werden üblicherweise durch ein abnehmbares Bodentuch miteinander verbunden. Insofern stellt ein solcher Balg eine im Wesentlichen geschlossene Einheit dar.

Vielfach befinden sich im Bereich des Balges Versorgungsleitungen, die von außen, allerdings auch von innen her zugänglich sein müssen. Diese Problematik stellt sich insbesondere dann, wenn zwei ineinander gelagerte Bälge Verwendung finden, wobei eine solche Konstruktion immer dann zum Einsatz gelangt, wenn insbesondere Geräusche aber auch Witterungseinflüsse von außen abgehalten werden sollen.

Bekannt ist in diesem Zusammenhang allerdings auch, auf der Innenseite eines solchen Balges hochbiegsame Seitenwände vorzusehen, die den Balg über die gesamte Höhe im Wesentlichen abdecken. Solche Seitenwände, die hochelastisch ausgebildet sind, dienen nicht nur optischen Zwecken, sondern schützen den Balg auch vor Vandalismus.

Es wurde bereits an anderer Stelle dargelegt, dass insbesondere Versorgungsleitungen im Bereich des Balges von einem Fahrzeug zum benachbarten Fahrzeug geführt werden. Um diese zugänglich zu machen, ist bislang erforderlich, den Balg entweder an der Stirnseite eines Fahrzeuges zu trennen oder aber, sofern es sich um einen Balg mit zwei Balghälften handelt, den Balg mittig über die dort befindlichen Balgrahmen zu entkuppeln. Dies ist äußerst aufwendig, insbesondere wenn man bedenkt, dass es häufig ausreichend ist, wenn die Möglichkeit besteht, lediglich einen kurzen Blick auf die dort verlaufenden Leitungen oder dort befindlichen Aggregate zu werfen.

Um in diesem Zusammenhang eine einfache Zugangsmöglichkeit zu schaffen, wird erfindungsgemäß vorgeschlagen, dass zumindest eine Balgfläche des Balges eine sich in Längsrichtung des Fahrzeuges über mehrere Falten oder Wellen erstreckende verschließbare, flächige Öffnung aufweist. Besteht die Möglichkeit der Öffnung des Balges, sei es von innen oder von außen, so ist auf relativ einfache Weise der Zugang zu Gerätschaften und hier insbesondere auch Versorgungsleitungen hinter dem Balg geschaffen.

Vorteilhafte Merkmale und Ausgestaltungen der Erfindung ergeben sich aus den Unteransprüchen.

So ist insbesondere vorgesehen, dass die verschließbare Öffnung ein von der Balgfläche lösbares Fensterelement aufweist. Hieraus wird deutlich, dass, um den entsprechenden Raum zugänglich zu machen, lediglich ein Fenster geöffnet bzw. abgenommen werden muss. Unter einer Balgfläche wird in diesem Zusammenhang die Fläche verstanden, die beispielsweise durch die Seitenwand des Balges gebildet wird oder aber auch durch die Decke des Balges.

Das Fensterelement weist korrespondierend zu den Balgrahmen des Falten- oder Wellenbalges entsprechend ausgebildete Rahmenleisten auf, wobei die Rahmenleisten durch Verbindungsmittel lösbar mit den Balgrahmen in Verbindung bringbar sind. Die Rahmenleisten sind Teil eines balgförmig ausgebildeten Fensterelementes, wobei die Rahmenleisten dieses Fensterelementes durch Verbindungsmittel mit den Balgrahmen verbindbar sind, die Bestandteil des übrigen Balges sind.

Nach einem weiteren Merkmal der Erfindung sind durch die Rahmenleisten unter Bildung von Falten oder Wellen Streifen von Balgmaterial erfasst. Das heißt, dass die Rahmenleisten in Verbindung mit den Streifen aus Balgmaterial das falten- oder wellenbalgförmige Fensterelement bilden.

Das bereits zuvor erwähnte Verbindungsmittel zur Verbindung der Rahmenleisten mit dem Balgrahmen ist als Übersetzungsprofil ausgebildet; das Übersetzungsprofil wird hierbei durch den Balgrahmen einerseits und die Rahmenleiste andererseits formschlüssig aber verschieblich aufgenommen. Das heißt, dass das Übersetzungsprofil auf der Rahmenleiste und dem Balgrahmen zwar verschieblich ist, aber von dem Balgrahmen und auch von der Rahmenleiste nicht abnehmbar ist. In diesem Zusammenhang ist insbesondere vorgesehen, dass die Rahmenleisten und die Balgrahmen dieselbe äußere Querschnittsform aufweisen, wobei das Übersetzungsprofil einen inneren, freien Querschnitt zeigt, der in etwa der äußeren Querschnittsform der Rahmenleisten und der Balgrahmen entspricht. In Verbindung mit der formschlüssigen Anordnung des Übersetzungsprofiles auf sowohl dem Balgrahmen als auch der Rahmenleiste und dessen Verschieblichkeit auf dem Balgrahmen und der Rahmenleiste wird nun durch Überlappung des Übersetzungsprofiles einerseits mit dem Balgrahmen und andererseits mit der Rahmenleiste erreicht, dass zwischen dem Fensterelement einerseits und dem Balg andererseits eine zuverlässige und stabile Verbindung erzielbar ist.

Nach einem besonderen Merkmal der Erfindung ist vorgesehen, dass die durch die Rahmenleisten des Fensterelementes erfassten Streifen aus Balgmaterial zu beiden Enden jeweils eine Verlängerung aufweisen, wobei die Verlängerung jeweils mit den Streifen des Balgmaterials in lösbaren Kontakt bringbar ist, wobei sich die Streifen einander überlappen. Hierdurch wird erreicht, dass ein solches Fensterelement durchaus wasserdicht in die entsprechende Aussparung des Balges eingesetzt werden kann. Durch die Verlängerung der Streifen an Balgmaterial wird durch die Verwendung beispielsweise von Flauschband im Übergangsbereich des Streifens des Fensterelementes zum Streifen des Balges eine im Wesentlichen solche wasserdichte Verbindung geschaffen, insbesondere wenn man davon ausgeht, dass bei der Anordnung eines solchen Fensters im Seitenwandbereich am oberen Ende des Fensterelementes die Verlängerung des Streifens des Fensterelementes von außen auf den Balg gesehen hinter dem Streifen des Balgmaterials befestigt ist. Unten ist es genau umgekehrt, hier überlappt von außen gesehen der Materialstreifen des Fensterelementes den Materialstreifen des Balges. Zur Fixierung der Materialstreifen aufeinander können neben Flauschbändern auch Druckknöpfe und ähnliche lösbare Verbindungsmittel vorgesehen sein.

Bei einem Faltenbalg, bei dem das Fensterelement von der Innenseite des Balges lösbar ist, weist der Faltenbalg auf der Innenseite im Bereich des Fensterelementes Balgrahmen auf, wobei die Übersetzungsprofile formschlüssig und verschieblich durch die Balgrahmen und die Rahmenleisten des Fensterelementes auf der Innenseite aufnehmbar sind. Das heißt, dass das Fensterelement von innen zugänglich ist. Insofern ist ein solches Fensterelement auch als Notausstiegsfenster verwendbar, da es wie bereits ausgeführt von innen zugänglich ist. Auf der Außenseite eines Faltenbalges sind insofern dann im Querschnitt U-förmige Balgrahmen vorgesehen, die im Bereich des Fensterelementes zur Bildung des Fensterelementes allerdings getrennt sind. Dies ist nicht von Nachteil, da wie bereits ausgeführt im Bereich des Übergangs vom Fensterelement zum Balg die entsprechenden Streifen des Balgmaterials einander überlappend miteinander beispielsweise durch Flauschbänder verbunden sind. Denkbar ist allerdings auch hier der Einsatz der Übersetzungsprofile auf den entsprechend ausgebildeten Balgrahmen und Rahmenleisten.

Bei einem Faltenbalg, bei dem das Fensterelement von der Außenseite des Balges lösbar ist, weist der Faltenbalg auf der Innenseite Einfassbänder auf, die die Streifen von Balgmaterial aufnehmen. Hierbei verläuft die Trennlinie zwischen Fensterelement und Balg auch im Bereich der Einfassbänder.

Nach einem besonderen Merkmal der Erfindung ist vorgesehen, dass die Balgrahmen und die Balgleisten, die die Übersetzungsprofile aufnehmen, im Querschnitt Ω-förmig ausgebildet sind. Es sind allerdings auch beliebige andere Rahmenformen denkbar; es ist lediglich sicherzustellen, dass das Übersetzungsprofil verschieblich durch die Balgrahmen und die Balgleisten aufnehmbar ist, aber dennoch nicht von den Balgrahmen und auch nicht von der Balgleiste abnehmbar ist.

Die Streifen von Balgmaterial umfassen einen Festigkeitsträger, der zumindest auf einer Seite mit einem Kunststoff beschichtet ist, um den Festigkeitsträger wasserundurchlässig zu gestalten. Es können allerdings auch zwei und mehr Festigkeitsträger aufeinander zur Bildung des Balgmaterials vorgesehen sein. Der Balg selbst wird dann steifer, er ist allerdings auch stabiler.

Nach einem weiteren Merkmal ist vorgesehen, dass die Balgrahmen und/oder die Rahmenleisten Mittel zur Fixierung des Übersetzungsprofiles in überlappter Stellung sowohl auf dem jeweiligen Balgrahmen als auch auf der jeweiligen Rahmenleiste aufweisen. In diesem Zusammenhang zeichnet sich eine einfache Form der Mittel zur Fixierung dadurch aus, dass die Balgrahmen im Übergangsbereich zum Fensterelement jeweils einen der Balgrahmen quer zur Längsachse durchdringenden Stift aufweisen, wobei die Stifte in entsprechenden Längsschlitzen des Übersetzungsprofiles geführt sind, wobei die Enden der Längsschlitze jeweils den Anschlag für den jeweiligen Stift bilden. Insbesondere wenn ein solches Fensterelement im Seitenwandbereich vorgesehen ist, befindet sich ein solcher Stift knapp oberhalb der Trennlinie von Fensterelement zu Balg im Balgrahmen, sodass bei entsprechender Länge des Längsschlitzes das Übersetzungsprofil allein aufgrund der Schwerkraft in der überlappenden Stellung gehalten wird. Entsprechend ist am unteren Übergang des Fensterelementes zum Balg der Stift in der Rahmenleiste vorgesehen, wobei ebenfalls aufgrund der Schwerkraft das dort befindliche Übersetzungsprofil sich in überlappender Stellung mit dem entsprechenden Balgrahmen befindet, wenn sich das Fenster in der Seitenwand angeordnet ist.

Anhand der Zeichnungen wird die Erfindung beispielhaft näher erläutert.
- Fig. 1: zeigt schematisch den Balg eines Übergangs zwischen zwei gelenkig miteinander verbundenen Fahrzeugen;
- Fig. 2: zeigt einen Schnitt gemäß der Linie II-II aus Fig. 1 in schematischer Darstellung;
- Fig. 3: zeigt eine perspektivische Ansicht auf eine Explosionsdarstellung eines Teils des Fensters in einer Balgseitenwand;

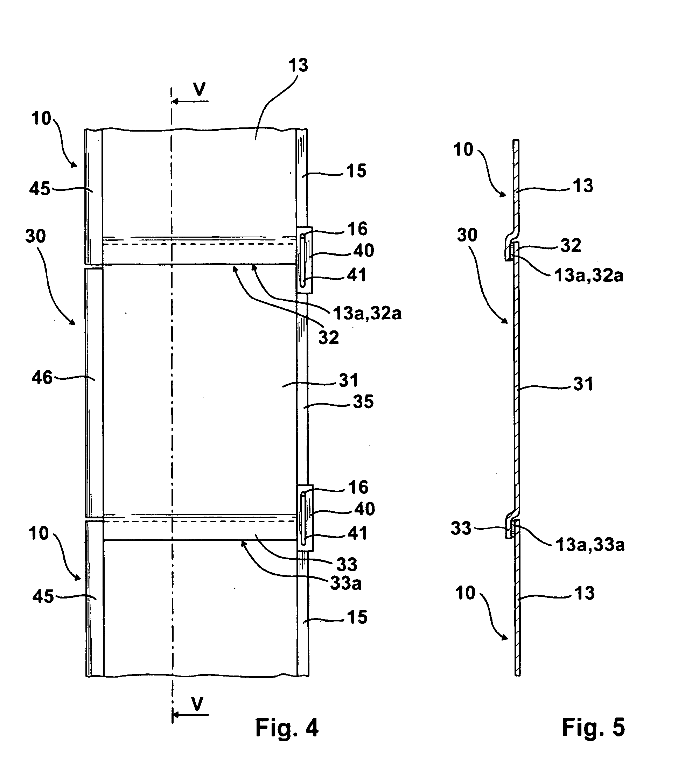

- Fig. 4: zeigt eine Seitenansicht aus Fig. 3;
- Fig. 5: zeigt einen Schnitt gemäß der Linie V-V aus Fig. 4.

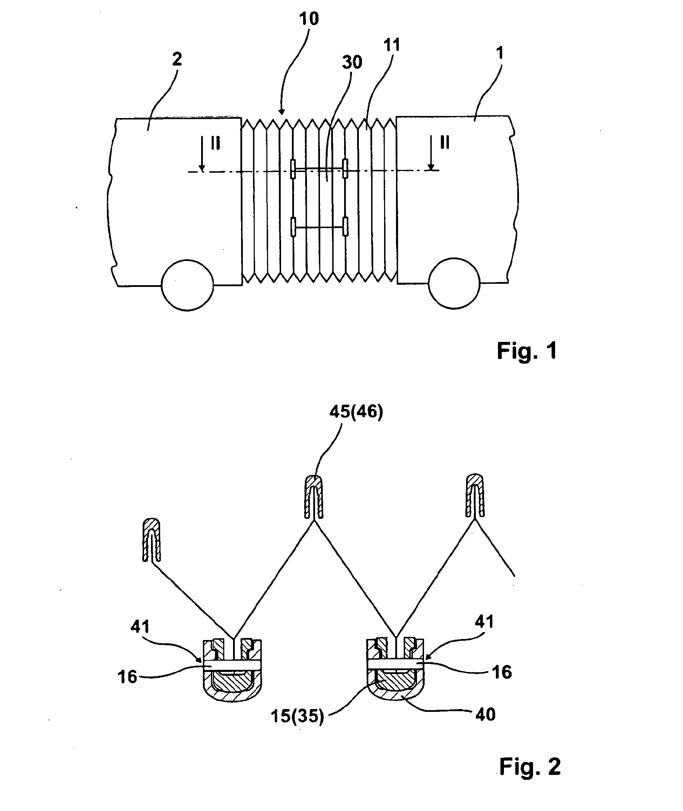

Aus der Darstellung gemäß Fig. 1 sind zwei Fahrzeuge 1 und 2 erkennbar, die durch einen Balg 10 miteinander verbunden sind, der Teil eines Übergangs ist. Der Balg 10 weist eine Balgseitenwand 11 auf, die ebenso wie die gegenüberliegende Balgseitenwand wie auch die Balgdecke eine Balgfläche bildet. In der als Balgseitenwand ausgebildeten Balgfläche befindet sich das mit 30 bezeichnete Fensterelement.

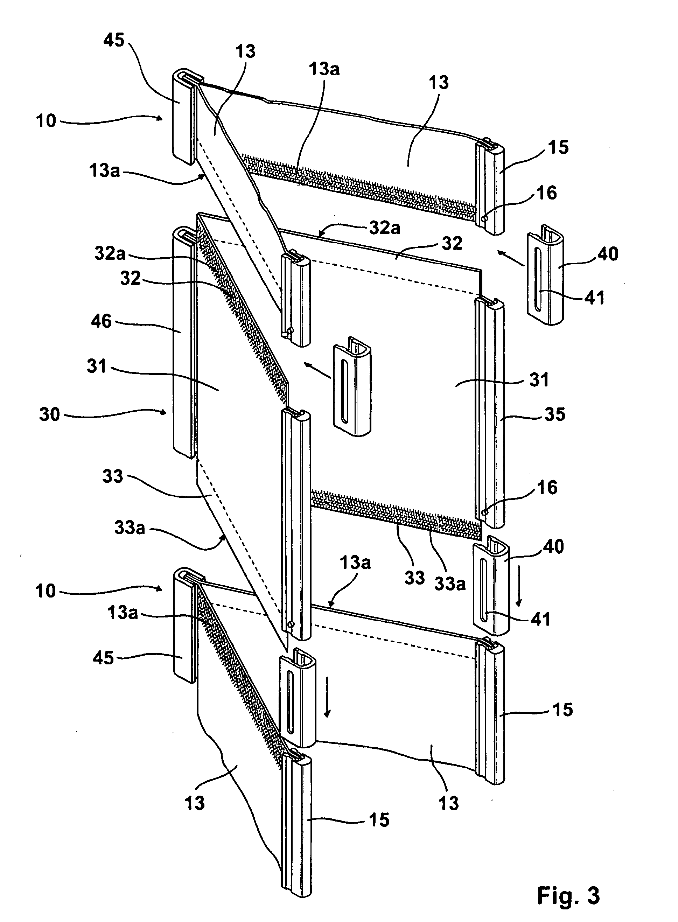

Gegenstand der Erfindung ist nunmehr die Anordnung des Fensterelementes in der Balgfläche, d. h. im vorliegenden Fall in der Balgseitenwand 11. Betrachtet man zunächst die perspektivische Darstellung gemäß Fig. 3, so erkennt man, dass das Fensterelement 30 aus mehreren faltenförmig angeordneten Streifen 31 aus Balgmaterial ausgebildet ist. Die Streifen 31 aus Balgmaterial weisen an ihren oberen und unteren Enden jeweils eine Verlängerung 32, 33 auf, die mit den entsprechenden Streifen 13 aus Balgmaterial in Verbindung gebracht werden. Die Streifen 31 aus Balgmaterial des Fensterelementes 30 sind an einem Ende jeweils durch Rahmenleisten 35 gehalten, wobei die Rahmenleisten im Querschnitt Ω-förmig ausgebildet sind. In gleicher Weise ausgebildet sind korrespondierend hierzu die Balgrahmen 15 des Balges. Zur Verbindung der Rahmenleisten 35 mit den Balgrahmen 15 sind Übersetzungsprofile 40 vorgesehen, wobei ein solches Übersetzungsprofil einen Innenquerschnitt aufweist, der dem Außenquerschnitt der Rahmenleiste und auch des Balgrahmens entspricht. Das heißt, dass das Übersetzungsprofil 40 formschlüssig auf sowohl der Rahmenleiste 35 als auch auf dem Balgrahmen 15 verschieblich angeordnet ist. Bei der Anordnung des Fensterelementes 30 in der Seitenwand des Balges ist oberhalb des Fensterelementes in dem Balgrahmen 15 ein den Balgrahmen quer durchdringender Stift 16 vorgesehen, der in dem Längsschlitz 41 des Übersetzungsprofiles 40 geführt ist. Das heißt, dass der Stift 16 als Anschlag in dem Längsschlitz 41 bei Bewegung des Übersetzungsprofiles 40 entlang der Rahmenleiste 35 bzw. des Balgrahmens 15 dient. An der Unterseite des Fensterelementes 30 befindet sich eine ebensolche Verbindung wie zuvor beschrieben mit einem Übersetzungsprofil 40, wobei hierbei der Stift 16 in der Rahmenleiste angeordnet ist, und wie am oberen Ende des Fensters auch, allein aufgrund der Schwerkraft die Übersetzungsprofile 40 jeweils sowohl die Rahmenleiste 35 als auch den Balgrahmen 15 überlappen. In überlappter Stellung des Übersetzungsprofiles 40 mit der Rahmenleiste 35 bzw. dem Balgrahmen 15 ist die Verbindung der beiden Teile gewährleistet.

Es wurde bereits darauf hingewiesen, dass die Streifen 31 aus Balgmaterial zu beiden Enden eine Verlängerung 32, 33 aufweisen, wobei die jeweilige Verlängerung auf der Innen- bzw. auf der Außenseite mit einem Flauschband 32a, 33a belegt ist. Korrespondierend hierzu weisen die Streifen 13 aus Balgmaterial des Balges 10 an entsprechender Stelle ebenfalls ein Flauschband 13a auf, sodass die Streifen 31 aus Balgmaterial mit dem Streifen 13 aus Balgmaterial verbunden werden können. An der den Rahmenleisten 35 bzw. den Balgrahmen 15 gegenüberliegenden Seiten sind die Streifen 13 bzw. 31 aus Balgmaterial ebenfalls durch U-förmige Balgrahmen 45 bzw. U-förmige Rahmenleisten 46 erfasst, wobei allerdings die Balgrahmen 45 und die Rahmenleisten 46 durch ein Einfassband, das ebenfalls U-förmig ausgebildet ist, ersetzt sein können. Von der Erfindung mit umfasst ist auch eine Variante, bei der auch auf der Seite, auf der nunmehr ein U-förmiger Balgrahmen 45 bzw. eine U-förmige Rahmenleiste 46 dargestellt sind, auch Balgrahmen 15 bzw. Rahmenleisten 35 angeordnet sein können, die im Querschnitt Ω-förmig ausgebildet sind.

Die gefundene Fensterkonstruktion hat sich als robust, einfach zu handhaben und preiswert herausgestellt. Zum Wechseln oder zum Öffnen des Fensters ist lediglich erforderlich, dass die oberhalb und unterhalb des Fensterelementes angeordneten Übersetzungsprofile 40 nach oben bzw. nach unten verschoben werden, die Materialstreifen 13, 31 im Bereich ihrer Flauschbänder gelöst werden, um dann das Fensterelement entnehmen zu können. Der Einbau eines solchen Fensterelementes 30 gestaltet sich in gleicher Weise einfach.

### Bezugszeichenliste:

- 1: Fahrzeug
- 2: Fahrzeug
- 10: Balg
- 11: Balgseitenwand
- 13: Streifen
- 13a: Flauschband
- 15: Balgrahmen
- 16: Stift
- 30: Fensterelement
- 31: Streifen
- 32: Verlängerung
- 32a: Flauschband
- 33: Verlängerung
- 33a: Flauschband
- 35: Rahmenleiste
- 40: Übersetzungsprofil
- 41: Längsschlitz
- 45: Balgrahmen
- 46: Rahmenleiste

## Patentansprüche

1. Falten- oder Wellenbalg eines Übergangs zwischen zwei gelenkig miteinander verbundenen Fahrzeugen, wobei der Balg (10) mehrere in etwa U-förmig umlaufende Balgrahmen (15) umfasst, wobei durch die Balgrahmen (15) unter Bildung von Falten oder Wellen Streifen (13) aus Balgmaterial erfasst sind,
**dadurch gekennzeichnet,**
**dass** mindestens eine Balgfläche des Balges (10) eine sich in Längsrichtung des Fahrzeugs (1, 2) über mehrere Falten oder Wellen erstreckende verschließbare, flächige Öffnung aufweist.

2. Falten- oder Wellenbalg nach Anspruch 1,
**dadurch gekennzeichnet,**
**dass** die verschließbare Öffnung ein von der Balgfläche lösbares Fensterelement (30) aufweist.

3. Falten- oder Wellenbalg nach Anspruch 2,
**dadurch gekennzeichnet,**
**dass** das Fensterelement (30) korrespondierend zu den Balgrahmen (15) des Falten- oder Wellenbalges entsprechend ausgebildete Rahmenleisten (35) aufweist, wobei die Rahmenleisten (35) durch Verbindungsmittel lösbar mit den Balgrahmen (15) in Verbindung bringbar sind.

4. Falten- oder Wellenbalg nach Anspruch 3,
**dadurch gekennzeichnet,**
**dass** durch die Rahmenleisten (35) unter Bildung von Falten oder Wellen Streifen (31) aus Balgmaterial erfasst sind.

5. Falten- oder Wellenbalg nach Anspruch 3 oder 4,
**dadurch gekennzeichnet,**
**dass** das Verbindungsmittel als Übersetzungsprofil (40) ausgebildet ist, das durch den Balgrahmen (15) und die Rahmenleiste (35) formschlüssig und verschieblich aufgenommen ist.

6. Falten- oder Wellenbalg nach einem der Ansprüche 3 bis 5,
**dadurch gekennzeichnet,**
**dass** die Rahmenleisten (35) und die Balgrahmen (15) dieselbe äußere Querschnittsform aufweisen, wobei das Übersetzungsprofil (40) einen inneren freien Querschnitt zeigt, der der äußeren Querschnittsform der Rahmenleisten (35) und der Balgrahmen (15) entspricht.

7. Falten- oder Wellenbalg nach einem der Ansprüche 3 bis 6,
**dadurch gekennzeichnet,**
**dass** die durch die Rahmenleisten (35) des Fensterelementes (30) erfassten Streifen (13, 31) von Balgmaterial zu beiden Enden jeweils eine Verlängerung (32, 33) aufweisen, wobei die Verlängerungen (32, 33) jeweils mit den Streifen (13, 31) des Balgmaterials in lösbaren Kontakt bringbar sind, wobei sich die Streifen (13, 31) einander überlappen.

8. Falten- oder Wellenbalg nach Anspruch 7,
**dadurch gekennzeichnet,**
**dass** zur Bereitstellung des lösbaren Kontaktes Flauschbänder (32a, 33a), Druckknöpfe und Ähnliches vorgesehen sind.

9. Falten- oder Wellenbalg nach einem der Ansprüche 2 bis 8,
**dadurch gekennzeichnet,**
**dass** bei einem Faltenbalg, bei dem das Fensterelement (30) von der Innenseite des Balges (10) lösbar ist, der Faltenbalg auf der Innenseite im Bereich des Fensterelementes (30) Balgrahmen (15) aufweist, wobei die Übersetzungsprofile (40) formschlüssig und verschieblich durch die Balgrahmen (15) und die Rahmenleisten (35) des Fensterelements (30) aufnehmbar sind.

10. Falten- oder Wellenbalg nach einem der Ansprüche 2 bis 8,
**dadurch gekennzeichnet,**
**dass** bei einem Faltenbalg bei dem das Fensterelement (30) von der Außenseite des Balges (10) lösbar ist, der Faltenbalg auf der Innenseite Einfassbänder aufweist, die die Streifen (13, 31) aus Balgmaterial des Balges und des Fensterelements (30) aufnehmen.

11. Falten- oder Wellenbalg nach Anspruch 9,
**dadurch gekennzeichnet,**
**dass** der Faltenbalg auf der Außenseite Balgrahmen (15) aufweist.

12. Falten- oder Wellenbalg nach einem der Ansprüche 3 bis 11,
**dadurch gekennzeichnet,**
**dass** die Balgrahmen (15) und die Rahmenleisten (35), die die Übersetzungsprofile (40) aufnehmen, im Querschnitt Ω-förmig ausgebildet sind.

13. Falten- oder Wellenbalg nach einem der voranstehenden Ansprüche,
**dadurch gekennzeichnet,**
**dass** die Streifen (13, 31) aus Balgmaterial einen Festigkeitsträger aufweisen, der zumindest auf einer Seite mit einem Kunststoff beschichtet ist.

14. Falten- oder Wellenbalg nach einem der Ansprüche 5 bis 13,
**dadurch gekennzeichnet,**
**dass** die Balgrahmen (15) und/oder die Rahmenleisten (35) Mittel zur Fixierung des Übersetzungsprofiles (40) in überlappter Stellung sowohl von jeweils dem Balgrahmen (15) als auch von jeweils der Rahmenleiste (35) aufweisen.

15. Falten- oder Wellenbalg nach Anspruch 14,
**dadurch gekennzeichnet,**
**dass** das Mittel zur Fixierung des Übersetzungsprofiles (40) einen im Balgrahmen (15) oder in der Rahmenleiste (35) angeordneten Stift (16) umfasst, der in einen entsprechenden Längsschlitz (41) des Übersetzungsprofiles (40) hineinragt.

## Claims

1. A folded or corrugated bellows of a gangway between to articulately connected vehicles, the bellows (10) including several approximately U-shaped circumferential bellows frames (15), strips (13) of bellows material being captured by the bellows frames (15) thereby forming folds or waves,
**characterized in that**
at least one bellows surface of the bellows (10) comprises a plane, closable opening extending in the longitudinal direction of the vehicle (1, 2) across several folds or waves.

2. The folded or corrugated bellows according to claim 1,
**characterized in that**
the closable opening has a window element (30) that is detachable from the bellows surface.

3. The folded or corrugated bellows according to claim 2,
**characterized in that**
the window element (30) comprises frame bars (35) configured correspondingly to the bellows frames (15) of the folded or corrugated bellows, the frame bars (35) being detachably connectable with the bellows frames (15) by connecting means.

4. The folded or corrugated bellows according to claim 3,
**characterized in that**
strips (31) of bellows material are captured by the frame bars (35) thereby forming folds or waves.

5. The folded or corrugated bellows according to claim 3 or 4,
**characterized in that**
the connection means is configured as a transition profile (40), that is displaceably received by the bellows frame (15) and the frame bars (35) in a positively locking manner.

6. The folded or corrugated bellows according to one of the claims 3 to 5,
**characterized in that**
the frame bars (35) and the bellows frames (15) have the same outer cross-sectional shape, the transition profile (40) having a free inner cross-section that corresponds to the outer cross-sectional shape of the frame bars (35) and of the bellows frames (15).

7. The folded or corrugated bellows according to one of the claims 3 to 6,
**characterized in that**
the strips (13, 31) of bellows material captured by the frame bars (35) of the window element (30) have respectively one extension (32, 33) at both ends, the extensions (32, 33) being respectively adapted to be detachably brought in contact with the strips (13, 31) of the bellows material, wherein the strips (13, 31) overlap.

8. The folded or corrugated bellows according to claim 7,
**characterized in that**
in order to provide the detachable contact, hook-and-loop fasteners (32a, 33a), press studs and the like are provided.

9. The folded or corrugated bellows according to one of the claims 2 to 8,
**characterized in that**
in a folded bellows in which the window element (30) is detachable from the inner side of the bellows (10), the folded bellows comprises bellows frames (15) on the inner side in the area of the window element (30), the transition profiles (40) being displaceably receivable by the bellows frames (15) and the frame bars (35) of the window element (30) in a positively locking manner.

10. The folded or corrugated bellows according to one of the claims 2 to 8,
**characterized in that**
in a folded bellows in which the window element (30) is detachable from the outer side of the bellows (10), the folded bellows comprises binding tapes on the inner side, which receive the strips (13, 31) of bellows material of the bellows and of the window element (30).

11. The folded or corrugated bellows according to claim 9,
**characterized in that**
the folded bellows comprises bellows frames (15) on the outer side.

12. The folded or corrugated bellows according to one of the claims 3 to 11,
**characterized in that**
the bellows frames (15) and the frame bars (35), which receive the transition profiles (40) have an Ω-shaped cross-section.

13. The folded or corrugated bellows according to one of the aforementioned claims,
**characterized in that**
the strips (13, 31) of bellows material have a reinforcement that is coated with a plastic material on at least one side.

14. The folded or corrugated bellows according to one of the claims 5 to 13,
**characterized in that**
the bellows frames (15) and/or the frame bars (35) comprise means for fastening the transition profile (40) in a position overlapping respectively the bellows frame (15) as well as respectively the frame bar (35).

15. The folded or corrugated bellows according to claim 14,
**characterized in that**
the means for fastening the transition profile (40) includes a pin (16) disposed in the bellows frame (15) or in the frame bar (35), which protrudes into a corresponding longitudinal slot (41) of the transition profile (40).

## Revendications

1. Soufflet à plis ou à ondulations pour un passage entre deux véhicules articulés couplés entre eux, dans lequel le soufflet (10) comporte plusieurs armatures de soufflet (15) ayant approximativement une forme de U, dans lequel des bandes (13) en matériau de soufflet sont maintenus par les armatures de soufflet (15) pour la formation des plis ou des ondulations,
**caractérisé en ce que,**
au moins une surface de soufflet du soufflet (10) comporte une surface d'ouverture pouvant être fermée et s'étendant sur plusieurs plis ou ondulations dans la direction longitudinale du véhicule (1, 2).

2. Soufflet à plis ou à ondulations selon la revendication 1,
**caractérisé en ce que,**
l'ouverture pouvant être fermée comporte un élément de fenêtre (30) pouvant être détaché de la surface du soufflet.

3. Soufflet à plis ou à ondulations selon la revendication 2,
**caractérisé en ce que,**
l'élément de fenêtre (30) comporte des listes d'armatures (35) correspondant aux armatures de soufflet (15) du soufflet à plis ou à ondulations formés de façon adaptée, dans lequel les listes d'armatures (35) sont ajustables de façon amovible aux armatures de soufflet (15) grâce à des moyens de liaison.

4. Soufflet à plis ou à ondulations selon la revendication 3,
**caractérisé en ce que,**
des bandes (31) en matériau de soufflet sont maintenues par les listes d'armatures (35) pour la formation de plis ou d'ondulations.

5. Soufflet à plis ou à ondulations selon la revendication 3 ou 4,
**caractérisé en ce que,**
les moyens de liaison sont constitués d'un profil de recouvrement (40) qui est tenu par l'armature de soufflet (15) et les listes d'armatures (35) et qui a une complémentarité de forme et est coulissant.

6. Soufflet à plis ou à ondulations selon les revendications 3 à 5,
**caractérisé en ce que,**
les listes d'armatures (35) et les armatures de soufflet (15) présentent le même profil de section transversale, dans lequel le profil de recouvrement (40) présente une section intérieure libre qui correspond au profil extérieur de la section transversale des listes d'armatures (35) et des armatures de soufflet (15).

7. Soufflet à plis ou à ondulations selon les revendications 3 à 6,
**caractérisé en ce que,**
les bandes (13, 31) de matériau de soufflet tenues par les listes d'armatures (35) de l'élément de fenêtre (30) présentent aux deux extrémités, des prolongements (32, 33) respectifs, dans lequel les prolongements (32, 33) sont en contact amovible avec les bandes (13, 31) de matériau de soufflet, dans lequel les bandes (13, 31) se superposent.

8. Soufflet à plis ou à ondulations selon la revendication 7,
**caractérisé en ce que,**
pour assurer le contact amovible, on utilise des bandes de fixation (32a, 33a), des boutons poussoirs et similaires.

9. Soufflet à plis ou à ondulations selon l'une des revendications 2 à 8,
**caractérisé en ce que,**
pour un soufflet à plis, pour lequel l'élément de fenêtre (30) est amovible par l'intérieur du soufflet (10), le soufflet à plis comporte dans le secteur de l'élément de fenêtre (30) des armatures de soufflet (15), dans lequel le profil de recouvrement (40) peut être couplé par complémentarité de forme et coulissant sur les armatures de soufflet (15) et les listes d'armatures (35) sur l'élément de fenêtre (30).

10. Soufflet à plis ou à ondulations selon l'une des revendications 2 à 8,
**caractérisé en ce que,**
pour un soufflet à plis pour lequel l'élément de fenêtre (30) est détachable par le côté extérieur du soufflet (10), le soufflet à plis comportant des bandes de réceptrices sur son côté intérieur, qui maintiennent les bandes (13, 31) en matériau de soufflet et l'élément de fenêtre (30).

11. Soufflet à plis ou à ondulations selon la revendication 9,
**caractérisé en ce que,**
le soufflet à plis comporte des armatures de soufflet (15) sur son côté extérieur.

12. Soufflet à plis ou à ondulations selon l'une des revendications 3 à 11,
**caractérisé en ce que,**
les armatures de soufflet (15) et les listes d'armatures (35) qui portent les profils de recouvrement (40) présentent une section transversale profilée en forme de Ω.

13. Soufflet à plis ou à ondulations selon l'une des revendications précédentes,
**caractérisé en ce que,**
les bandes (13, 31) en matériau de soufflet comportent un support de fixation, ou du moins sur un côté, un revêtement en matière synthétique.

14. Soufflet à plis ou à ondulations selon l'une des revendications 5 à 13,
**caractérisé en ce que,**
les armatures de soufflet (15) et/ou les listes d'armatures (35) comportent des moyens de fixation du profil de recouvrement (40) en superposition à la fois sur les armatures de soufflet (15) et sur des listes d'armatures (35).

15. Soufflet à plis ou à ondulations selon la revendication 14,
**caractérisé en ce que,**
les moyens de fixation du profil de recouvrement (40) comportent une tige (16) montée dans l'armature de soufflet (15) ou la liste d'armatures (35), qui s'engage dans une fente longitudinale (41) correspondante du profil de recouvrement (40).
